# NEUE EUROPÄISCHE PATENTSCHRIFT

(11) **EP 0 588 256 B2**
(45) Veröffentlichungstag und Bekanntmachung des Hinweises auf die Entscheidung über den Einspruch: **15.09.1999**
(45) Hinweis auf die Patenterteilung: 15.05.1996
(21) Anmeldenummer: 93114573.4
(22) Anmeldetag: 10.09.1993
(51) Int. Cl.: B60T 13/66

(54) **Druckluftbremse für Strassentriebfahrzeuge**
Air brake for road motor vehicles
Système de freinage à air comprimé pour véhicules moteurs routiers

(30) Priorität: 14.09.1992 DE 4230674
(43) Veröffentlichungstag der Anmeldung: 23.03.1994
(73) Patentinhaber: KNORR-BREMSE Systeme für Nutzfahrzeuge GmbH, 80809 München (DE)
(72) Erfinder: Gerum, Eduard, Dr., D-83026 Rosenheim (DE)

(56) Entgegenhaltungen:
- EP-A- 0 378 810
- EP-B- 0 378 811
- DE-A- 3 207 793
- DE-A- 3 936 726
- DE-C- 2 218 315
- FR-A- 2 527 154

## Beschreibung

Die Erfindung bezieht sich auf eine Druckluftbremse für Straßentriebfahrzeuge, welche mit ebenfalls druckluftgebremsten Anhängefahrzeugen kuppelbar sind, mit einer rein pneumatischen Betriebsbremse, umfassend ein vorzugsweise als Trittplattenbremsventil ausgebildetes Bremssteuerventil mit einem Druckluftsteuerteil zum Steuern der Druckluftbeaufschlagung von Druckluftbremszylindern des Straßentriebfahrzeuges und zum Ansteuern eines Anhängersteuerventils, welches einen bei angekuppeltem Anhängefahrzeug dessen Anhängerbremsventil zuzuführenden Anhängerleitungsdruck aussteuert, und mit einer vom Bremssteuerventil ansteuerbaren Steuerelektronik zum elektrischen Betätigen eines mit dem Anhängersteuerventil zusammenwirkenden Elektroteiles, der bei seiner Betätigung zum Zwecke einer Voreilung der Anhängerbremse eine begrenzte Übersteuerung des Anhängerleitungsdruckes bewirkt.

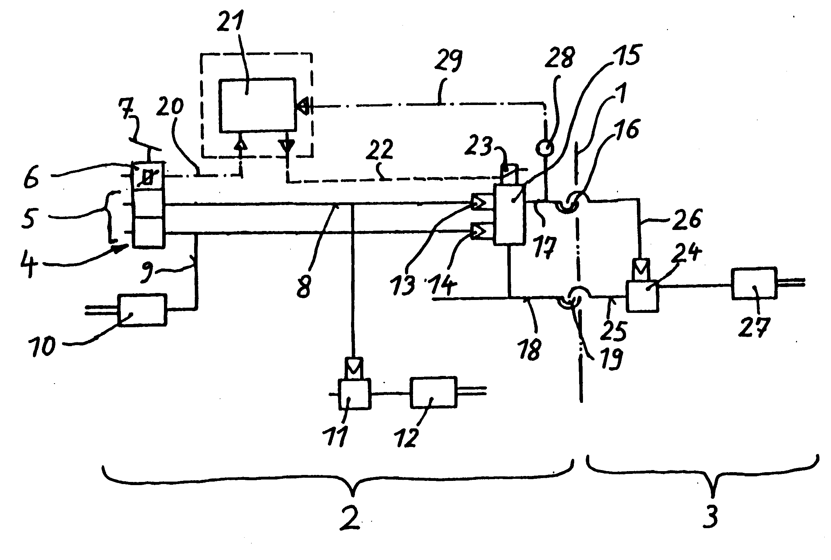

Eine derartige Druckluftbremse ist aus der DE-OS 39 36 726, dortige Fig.1, bekannt. Bei dieser bekannten Druckluftbremse wird zum Erzielen der Voreilung bzw. Übersteuerung nahe des Bremssteuerventils wenigstens ein von dessen ausgesteuertem Bremsdruck beaufschlagter P/E-Wandler als Sensor angeordnet, dessen elektrisches Ausgangssignal der Ansteuerung der Steuerelektronik dient. Obwohl der pneumatische Bremsdruckaufbau durch das Trittplattenbremsventil und das Ansprechen des P/E-Wandlers bestimmte Zeitspannen benötigen, wird hierdurch doch, ausgehend vom Betätigungszeitpunkt des Bremssteuerventils, ein sehr schnell nachfolgendes Ansprechen des Anhängersteuerventils vermittels des Elektroteiles erzielt, wodurch auch die Anhängerbremse frühzeitig anspricht: Bei der bekannten Druckluftbremse treten also - bezogen auf eine rein pneumatische Druckluftbremse - nur relativ kurze Tot- bzw. Druckaufbauzeiten bezüglich des Anhängersteuerventils und der Anhängerbremse auf. Des weiteren ist die bekannte Druckluftbremse mit einer Vorrichtung zum Messen der Kupplungskräfte zum Anhängefahrzeug während Bremssteuervorgängen ausgestattet und die Steuerelektronik ist selbstlernend ausgebildet, derart, daß sie in Abhängigkeit von während vorangegangenen Bremsvorgängen aufgetretenen Kupplungskräften die Voreilung bzw. Übersteuerung des Anhängerleitungsdruckes vermittels des Elektroteiles des Anhängersteuerventiles derart steuert, daß die Kupplungskräfte bestimmte, vorgegebene Grenzwerte möglichst nicht überschreiten. Weiterhin ist die Steuererlektronik bei dieser bekannten Druckluftbremse derart ausgebildet, daß sie die Voreilung bzw. Übersteuerung des Anhängerleitungsdruckes spätestens nach einer bestimmten Zeitspanne selbsttätig beendet. Bei dieser bekannten Druckluftbremse mit Ansteuerung der Steuerelektronik durch das Bremssteuerventil vermittels eines P/E-Wandlers und der hierdurch bedingten, bereits vorstehend erwähnten, zeitlichen Verzögerungen kann kein optimal rasch nachfolgendes Ansteuern des Anhängersteuerventils vermittels des Elektroteiles erreicht werden. Zudem erfordert die von Kupplungskräften abhängige Beeinflussung der Voreilung bzw. Übersteuerung eine zusätzliche, aufwendige Sonderausstattung.

Ebenfalls der vorstehend erwähnten DE-OS 39 36 726 ist mit dortiger Fig.2 eine elektrisch gesteuerte Druckluftbremse für Straßentriebfahrzeuge entnehmbar, bei welcher das Bremssteuerventil ein mechanisch zusammen mit einem Druckluftsteuerteil für eine pneumatische Notbremseinrichtung betätigbares Elektrosteuerteil aufweist. Das elektrische Ausgangssignal des Elektrosteuerteiles wird der Steuerelektronik als Steuersignal zugeführt, welche über Magnetventile die Druckluftbeaufschlagung der Triebfahrzeug-Druckluftbremszylinder steuert; im weiteren ist diese bekannte Bremse hinsichtlich der Steuerelektronik, des Anhängersteuerventils, dessen Elektroteiles und der Kupplungskraftabhängigkeit wie vorstehend beschrieben ausgebildet und wirkt auch entsprechend. Bei dieser elektrisch gesteuerten Bremse ist zwar beim Betätigen des Bremssteuerventils ein optimal rasches Betätigen des Elektroteiles des Anhängersteuerventils mit dementsprechend optimal kurzen Tot- und Druckaufbauzeiten erreichbar, doch stellt die elektrische Steuerung der Bremse des Straßentriebfahrzeuges eine heute noch selten, nur bei wenigen Fahrzeugen realisierte Sonderausstattung dar.

Es ist Aufgabe der Erfindung, eine Druckluftbremse der eingangs genannten Art mit einfachen Mitteln derart auszustatten, daß optimal kurze Tot- und Druckaufbauzeiten hinsichtlich des Anhängersteuerventils erzielt werden. Auch soll eine entsprechende Nachrüstung bisher üblicher Druckluftbremsen in einfacher Weise mit nur geringem Aufwand möglich sein.

Diese Aufgabe wird nach der Erfindung durch die Merkmale des kennzeichnenden Teils des Anspruchs 1 gelöst.

Die Unteransprüche zeigen nach der weiteren Erfindung vorteilhafte Ausgestaltungsmöglichkeiten für eine derart ausgebildete Druckluftbremse auf.

In der Zeichnung ist ein Ausführungsbeispiel für eine nach der Erfindung ausgebildete Druckluftbremse in ihren wesentlichen Teilen schematisch dargestellt.

In der Zeichnung ist links der strichpunktierten Linie 1 die Druckluftbremse 2 des Straßentriebfahrzeuges, rechts der Linie 1 die Anhängerbremse 3 des Anhängefahrzeuges dargestellt. Der Druckluftbremse 2 gehört ein als Trittplattenbremsventil ausgebildetes Bremssteuerventil 4 zu, welches einen aus einer nicht dargestellten Druckluftquelle versorgten, zweikreisigen Druckluftsteuerteil 5 und einen aus einer nicht dargestellten Stromquelle versorgten Elektrosteuerteil 6 aufweist; der Druckluftsteuerteil 5 und der Elektrosteuerteil 6 sind gemeinsam mechanisch, gemäß dem Ausführungsbeispiel durch Niederdrücken der Trittplatte 7, betätigbar. Die vom Druckluftsteuerteil 5 aussteuerbaren Bremsdrücke werden durch Rohrleitungen 8 bzw. 9 den Druckluftbremszylindern 10 der Vorderachse bzw. über ein Relaisventil 11 den Druckluftbremszylindern 12 der Hinterachse zugeführt; selbstverständlich können den Druckluftbremszylindern 10 bzw. 12 weitere, übliche Ventileinrichtungen, beispielsweise fahrzeuglastabhängige Regelventile, Blockierschutzventile oder dergleichen, vorgeschaltet sein, auch kann das Relaisventil 11 entfallen. Die Rohrleitungen 8 und 9 führen des weiteren zu den Steuereingängen 13 und 14 eines Anhängersteuerventils 15, dessen Ausgangsdruck als Anhängerleitungsdruck eine zu einem Kupplungskopf 16 führende Anhängerleitung 17 beaufschlagt. Die Druckluftversorgung des Anhängersteuerventils 15 erfolgt durch eine aus einer nicht gezeigten Druckluftquelle gespeiste Rohrleitung 18, welche des weiteren zu einem zweiten Kupplungskopf 19 führt.

Mit Ausnahme des Elektrosteuerteiles 6 entspricht die Druckluftbremse 2 insoweit einer üblichen, zweikreisigen Nutzfahrzeug-Druckluftbremse.

Das elektrische Ausgangssignal des Elektrosteuerteiles 6 wird durch ein Steuerkabel 20 einer Steuerelektronik 21 als Ansteuersignal zugeführt. In Abhängigkeit von dieser Ansteuerung erstellt die Steuerelektronik 21 als Ausgangssignal ein elektrisches Betätigungssignal, welches durch ein Betätigungskabel 22 einem Elektroteil 23 zugeführt wird, welches sich am Anhängersteuerventil 15 befindet und mit diesem derart zusammenwirkt, daß beim Betätigen des Elektroteiles 23 das Anhängersteuerventil 15, bezogen auf seine pneumatische Ansteuerung durch die Steuereingänge 13 und/oder 14, einen übersteuerten Anhängerleitungsdruck in die Anhängerleitung 17 aussteuert: Das Anhängersteuerventil 15 steuert somit bei noch fehlender, pneumatischer Ansteuerung durch die Steuereingänge 13 und 14 in die Anhängerleitung 17 bei Betätigen des Elektroteils 23 bereits einen Anhängerleitungsdruck vorbestimmter Höhe aus, bei nachfolgend einsetzender, pneumatischer Ansteuerung durch die Steuereingänge 13 und 14 ergibt sich gegenüber dieser pneumatischen Ansteuerung bei betätigtem Elektroteil 23 ein überhöhter Anhängerleitungsdruck. Die Steuerelektronik 21 ist derart ausgebildet, daß sie nach ihrer Ansteuerung durch das Steuerkabel 20 das Elektroteil 23 nur für eine bestimmte Zeitspanne betätigt, die Übersteuerung des Anhängerleitungsdruckes wird also nach Ablauf dieser Zeitspanne selbsttätig beendet.

Die Anhängerbremse 3 umfaßt ein Anhängerbremsventil 24, welches zu seiner Druckluftversorgung mittels einer Rohrleitung 25 mit dem Kupplungskopf 19 und zu seiner Steuerung mittels einer Rohrleitung 26 dem Kupplungskopf 16 verbindbar ist. Das Anhängerbremsventil 24 überwacht die Druckbeaufschlagung eines oder mehrerer Druckluftbremszylinder 27 des Anhängefahrzeuges. An die Rohrleitung 25 ist wie üblich ein nicht dargestellter Vorratsluftbehälter angeschlossen, die Anhängerbremse kann des weiteren in üblicher, bekannter Weise weiter ausgestaltet sein, sie kann eine lastabhängige Beeinflussung des den Druckluftbremszylinder 27 beaufschlagenden Bremsdruckes, Relaisventile, Blockierschutzventile und dergleichen aufweisen.

Bei an die Druckluftbremse 2 angekuppelter Anhängerbremse 3, wie in der Zeichnung dargestellt, ergibt sich somit beim Betätigen des Bremssteuerventils 4 durch den Elektrosteuerteil 6 ein nahezu verzögerungsfreies Ansteuern der Steuerelektronik 21, welche ihrerseits sofort ein Betätigen des Elektroteiles 23 und damit ein Einsteuern eines Druckes in die Anhängerleitung 17 veranlaßt. Durch diesen Druckaufbau wird die Anhängerbremse 3 sehr schnell nach Betätigen des Bremssteuerventiles 4 im Bremssinne angesteuert und bewirkt ein Einbremsen des Anhängefahrzeuges. Die Totzeit zwischen dem Betätigen des Bremssteuerventils 4 und des Anhängersteuerventils 15 bzw. dem Einbremsen der Anhängerbremse wird somit sehr kurz gehalten, durch die Übersteuerung des in die Anhängerleitung 17 durch das Anhängersteuerventil 15 ausgesteuerten Anhängerleitungsdruckes und damit auch des Bremsdruckes im Druckluftbremszylinder 27 werden zudem die Druckaufbauzeiten in diesen ebenfalls sehr kurz gehalten. Die Anhängerbremse 3 wird also mit wirksamer Voreilung betätigt, wodurch die Kupplungskräfte zwischen dem Straßentriebfahrzeug und dem Anhängefahrzeug niedrig gehalten werden können. Wenn nach einer bestimmten Zeitspanne die Steuerelektronik 21 die Betätigung des Elektroteiles 23 beendet, wird die Übersteuerung beendet und es erfolgt eine übliche, rein pneumatische Steuerung der Anhängerbremse 3 nach Maßgabe der in die Rohrleitungen 8 und 9 eingesteuerten Bremsdrücke.

Die Druckluftbremse 2 kann des weiteren mit einem an die Anhängerleitung 17 angeschlossenen P/E-Wandler 28 als Sensor ausgestattet sein, dessen elektrisches Ausgangssignal durch ein Steuerkabel 29 der Steuerelektronik 21 zu geführt wird. Bei Erreichen eines bestimmten Schwellendruckes in der Anhängerleitung 17, der im Druckbereich zwischen ca. 0,5 und 1 bar liegen kann, oder eines bestimmten Übersteuerungswertes des in der Anhängerleitung 17 herrschenden Druckes wird die Steuerelektronik 21 durch das ihr durch das Steuerkabel 29 zugeführte Signal veranlaßt, die Betätigung des Elektroteiles 23 zu beenden. Auch hierdurch wird die Übersteuerung bzw. Voreilung der Anhängerbremse 3 begrenzt.

Das Elektroteil 23 kann in nicht dargestellter Weise zweckmäßig ein an das Betätigungskabel 22 angeschlossenes Magnetventil aufweisen, welches die Druckbeaufschlagung eines Vordruckraumes überwacht, wobei der Druck des Vordruckraumes einen mit dem Kolbensystem des Anhängersteuerventils in dessen Betätigungsrichtung gekoppelten Kolben in der erwähnten Betätigungsrichtung beaufschlagt. Das Magnetventil und der Vordruckraum können dabei klein ausgebildet werden.

Selbstverständlich ist die erfindungsgemäße Einrichtung zum Verkürzen der Tot- und Druckaufbauzeiten der Anhängerbremse auch bei andersartigen Druckluftbremsen, z.B. einkreisigen Druckluftbremsen oder indirekten Einleitungs-Anhängerbremsen, verwendbar. In jedem Fall sind vorhandene, rein pneumatische Druckluftbremsen in einfacher Weise mit nur geringen Aufwendungen mit der erfindungsgemäßen Einrichtung nachrüstbar.

### Kurzfassung:

Die Druckluftbremse (2) für Straßentriebfahrzeuge weist einen wie üblich ausgebildeten Druckluftteil mit einem Anhängersteuerventil (15) auf. Das Bremssteuerventil (4) ist zusätzlich mit einem mechanisch betätigbaren Elektrosteuerteil (6) ausgestattet, welcher dem elektrischen Ansteuern einer Steuerelektronik (21) dient. Die Steuerelektronik (21) betätigt bei ihrer Ansteuerung einen Elektroteil (23), welcher mit dem Anhängersteuerventil (15) zusammenwirkt und letzteres zum Aussteuern eines übersteuerten Leitungsdruckes in die Anhängerleitung (17) veranlaßt. Die Betätigung des Elektroteiles (23) ist zeit- oder druckmäßig begrenzt. Bei Bremssteuervorgängen vermittels des Bremssteuerventils (4) ergeben sich somit optimal kurze Totzeiten bzw. Druckaufbauzeiten hinsichtlich der Ansteuerung bzw. Betätigung der Anhängerbremse (3).

### Bezugszeichenliste

- 1: Linie
- 2: Druckluftbremse
- 3: Anhängerbremse
- 4: Bremssteuerventil
- 5: Druckluftsteuerteil
- 6: Elektrosteuerteil
- 7: Trittplatte
- 8: Rohrleitung
- 9: Rohrleitung
- 10: Druckluftbremszylinder
- 11: Relaisventil
- 12: Druckluftbremszylinder
- 13: Steuereingang
- 14: Steuereingang
- 15: Anhängersteuerventil
- 16: Kupplungskopf
- 17: Anhängerleitung
- 18: Rohrleitung
- 19: Kupplungskopf
- 20: Steuerhebel
- 21: Steuerelektronik
- 22: Betätigungshebel
- 23: Elektroteil
- 24: Anhängerbremsventil
- 25: Rohrleitung
- 26: Rohrleitung
- 27: Druckluftbremszylinder
- 28: P/E-Wandler
- 29: Steuerkabel

## Patentansprüche

1. Druckluftbremse (2) für Straßentriebfahrzeuge, welche mit ebenfalls druckluftgebremsten Anhängerfahrzeugen kuppelbar sind, mit einer rein pneumatischen Betriebsbremse, umfassend ein vorzugsweise als Trittplattenbremsventil ausgebildetes Bremssteuerventil (4) mit einem Druckluftsteuerteil (5) zum Steuern der Druckbeaufschlagung von Druckluftbremszylindern (10, 12) des Straßentriebfahrzeuges und zum Ansteuern eines Anhängersteuerventils (15), welches einen bei angekuppeltem Anhängerfahrzeug dessen Anhängerbremsventil (24) zuzuführenden Anhängerleitungsdruck aussteuert, und mit einer vom Bremssteuerventil (4) ansteuerbaren Steuerelektronik (21) zum elektrischen Betätigen eines mit dem Anhängersteuerventil (15) zusammenwirkenden Elektroteils (23), der bei seiner Betätigung zum Zwecke einer Voreilung der Anhängerbremse (3) eine begrenzte Übersteuerung des Anhängerleitungsdrucks bewirkt, **dadurch gekennzeichnet,** daß das Bremssteuerventil (4) einen Elektrosteuerteil (6) aufweist, der mechanisch zusammen mit dem Druckluftsteuerteil (5) betätigbar ist und dessen elektrisches Ausgangssignal der Steuerelektronik (21) als Ansteuersignal zum Betätigen des Elektroteils zugeführt wird, und daß an die den Anhängerleitungsdruck führende Anhängerleitung (17) als Sensor ein P/E-Wandler (28) angeschlossen ist, dessen elektrisches Ausgangssignal der Steuerelektronik (21) zugeführt wird, wobei die Steuerelektronik (21) bei einen Schwellenwert erreichendem Anhängerleitungsdruck das Betätigen des Elektroteils (23) unterbricht.

2. Druckluftbremse nach Anspruch 1, wobei die Anhängerbremse (3) als Zweileitungsbremse ausgebildet ist, **dadurch gekennzeichnet,** daß der Schwellenwert im Druckbereich zwischen ca. 0,5 und 1 bar liegt.

3. Druckluftbremse nach Anspruch 1 oder 2, **dadurch gekennzeichnet,** daß der Elektroteil (23) als Zusatzventil am Anhängersteuerventil (15) ausgebildet ist, das ein Magnetventil zum Steuern der Druckluftbeaufschlagung eines Vordruckraumes aufweist, dessen Druck einen mit dem Kolbensystem des Anhängersteuerventils in dessen Betätigungsrichtung gekoppelten Kolben in der Betätigungsrichtung beaufschlagt.

## Claims

1. Pneumatic brake (2) for road motor vehicles which can be coupled to trailer vehicles also having pneumatic brakes, having a purely pneumatic service brake, including a brake control valve (4) preferably constructed as a pedal-type brake valve and having a pneumatic control part (5) for controlling the pressure action on pneumatic brake cylinders (10, 12) of the road motor vehicle and for controlling a trailer control valve (15) which modulates a trailer line pressure for supplying the trailer brake valve (24) of a trailer vehicle, when coupled, and having an electronic control device (21) controllable by the brake control valve (4) for electrically actuating an electrical part (23) co-operating with the trailer control valve (15), which electrical part, when actuated, brings about a limited overmodulation of the trailer line pressure for the purpose of advancing the trailer brake (3), characterised in that the brake control valve (4) has an electrical control part (6) which can be mechanically actuated together with the pneumatic control part (5), and its electrical output signal is fed to the electronic control device (21) as a control signal for actuating the electrical part, and in that connected as a sensor to the trailer line (17) carrying the trailer line pressure is a P/E transducer (28) whose electrical output signal is fed to the electronic control device (21), the electronic control device (21) interrupting the actuation of the electrical part (23) when the trailer line pressure reaches a threshold value.

2. Pneumatic brake according to claim 1, the trailer brake (3) being constructed as a two-line brake, characterised in that the threshold value is in the pressure range between approximately 0.5 and 1 bar.

3. Pneumatic brake according to claim 1 or 2, characterised in that the electrical part (23) is constructed as an additional valve on the trailer control valve (15) and has a magnetic valve for controlling the pneumatic action of an inlet pressure chamber, the pressure of which acts in the actuation direction on a piston coupled to the piston system of the trailer control valve in the latter's actuation direction.

## Revendications

1. Système de freinage à air comprimé (2) destiné à des véhicules routiers moteurs, qui peuvent être attelés à des véhicules remorqués également freinés par air comprimé (3), comprenant un frein de service purement pneumatique, muni d'une soupape de commande de freinage (4), réalisée de préférence sous la forme d'une soupape de freinage à pédale et comprenant une partie de commande d'air comprimé (5) destinée à commander l'alimentation en pression de cylindres de frein à air comprimé (10, 12) du véhicule routier moteur et à piloter une soupape de commande de remorque (15) qui délivre une pression de conduite de remorque devant, lorsqu'un véhicule remorqué est attelé, être fournie à la soupape de freinage de remorque (24) de ce dernier, ainsi qu'une électronique de commande (21) pouvant être pilotée par la soupape de commande de freinage (4) pour l'actionnement électrique d'une partie électrique (23), qui coopère avec la soupape de commande de remorque (15) et qui, lors de son actionnement, engendre une commande en excès limitée de la pression de conduite de remorque, en vue de produire une avance du frein de remorque (3), caractérisé en ce que la soupape de commande de freinage (4) présente une partie de commande électrique (6), qui peut être actionnée mécaniquement en commun avec la partie de commande d'air comprimé (5) et dont le signal de sortie électrique est transmis à l'électronique de commande (21) en tant que signal de commande pour actionner la partie électrique, et en ce qu'à la conduite de remorque (17) véhiculant la pression de conduite de remorque, est raccordé, en tant que capteur, un convertisseur P/E (28), dont le signal de sortie électrique est transmis à l'électronique de commande (21), l'électronique de commande (21) interrompant l'actionnement de la partie électrique (23) lorsque la pression de conduite de remorque atteint une valeur de seuil.

2. Système de freinage à air comprimé selon la revendication 1, dans lequel le frein de remorque (3) est réalisé sous forme d'un frein à double conduite, caractérisé en ce que la valeur de seuil se situe dans la plage de pressions entre environ 0,5 et 1 bar.

3. Système de freinage à air comprimé selon la revendication 1 ou 2, caractérisé en ce que la partie électrique (23) est réalisée sous forme d'une soupape supplémentaire sur la soupape de commande de remorque (15), qui présente une électrovanne destinée à commander l'alimentation en air comprimé d'une chambre de pression pilote, dont la pression sollicite, dans la direction d'actionnement, un piston couplé au système de piston de la soupape de commande de remorque dans la direction d'actionnement de celle-ci.
